(19) Europäisches Patentamt
European Patent Office
Office européen des brevets

(11) **EP 1 420 365 A2**

(12) **EUROPEAN PATENT APPLICATION**

(43) Date of publication:
**19.05.2004 Bulletin 2004/21**

(51) Int Cl.[7]: **G06T 9/00**

(21) Application number: **03257076.4**

(22) Date of filing: **10.11.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **15.11.2002 JP 2002332137**

(71) Applicant: **Pioneer Corporation
Meguro-ku, Tokyo (JP)**

(72) Inventor: **Taima, Tooru c/o Pioneer Corporation
Ohta-ku Tokyo (JP)**

(74) Representative: **Haley, Stephen
Gill Jennings & Every,
Broadgate House,
7 Eldon Street
London EC2M 7LH (GB)**

(54) **Coding method, coding apparatus and coding program of image information**

(57) In coding image information, first, the whole image information subjected to coding is quantized and coded to extract feature information, as preparation of actual coding. When the feature information of the image information is obtained by quantizing and coding as preparation, a coding quantity predicting process for determining a proper quantizing factor by utilizing the feature information is executed. The feature information is information for indicating an information quantity according to image information contents subjected to coding. By determining the quantizing factor based on the feature information, the proper quantizing factor can be obtained in coding the image information. The coding quantity predicting process can be executed repeatedly until the proper quantizing factor is obtained. When the proper quantizing factor is obtained, an actual coding process is executed. Namely, by utilizing the proper quantizing factor obtained in the coding quantity predicting process, the image information is coded, and a result thereof is output as coded output data.

FIG. 2

```
       ┌─────────────────────┐
       │   CODING PROCESS     │
       └──────────┬──────────┘
                  │
       ┌──────────┴──────────┐
       │ CODING PROCESS FOR  │  S1
       │ FEATURE EXTRACTION  │
       └──────────┬──────────┘
                  │
       ┌──────────┴──────────┐
       │  CODING QUANTITY    │  S2
       │ PREDICTING PROCESS  │
       └──────────┬──────────┘
                  │
       ┌──────────┴──────────┐
       │  ACTUAL CODING      │  S3
       │     PROCESS         │
       └──────────┬──────────┘
                  │
       ┌──────────┴──────────┐
       │        END          │
       └─────────────────────┘
```

**Description**

The present invention relates to compression coding of image information.

Generally, since moving image information has a massive data quantity, huge storage capacity is needed to store the moving image information in a storage medium. Therefore, there is known a technique for compression coding of image data which enables storing moving image data in a recording medium such as an optical disc. As a method of the compression coding of moving image, MPEG is known as a representative example.

In the method of the compression coding such as the MPEG, generally, a motion predicting process such as DCT (Discrete Cosine Transform) is executed to the image data subjected to the coding. Then, obtained data is quantized by a suitable quantizing factor (quantizing bit number) of each frequency component, and is further codedby a variable length coding circuit. Generally, allocation of the quantizing factor is executed so that a bit distribution of a low-frequency component is large because the low-frequency component is significant component for forming the image and the bit distribution of a high-frequency component is small. If a large quantizing factor is set, a coding quantity in each one-frame image is small. Conversely, if a small quantizing factor is set, the coding quantity in each one-frame image is large.

There is known a method of coding the image having a lot of information quantity by allocating, to the image, a data quantity according to the information quantity which the image has. This method is disclosed in Japanese Patent Application Laid-open under No. 11-136673.

In the past coding process, based on an average coding quantity of the image data for which the coding process had already been executed, the quantizing factor of the image data which would be input afterward was determined, and coding quantity allocation was executed. Namely, based on the average coding quantity of an image data portion for which the coding process had been completed before the current time (in the past) at each time during the coding process, setting of the quantizing factor for the coding process which would be executed after the current time (in the future) , i.e. , the coding quantity allocation, was executed.

However, image data generally has scenes (or frames) which include large information quantities and small information quantities. For example, when the scene changes, the information quantity is large because image contents change largely, and the information quantity is not so large when similar image contents continue. Therefore, as described above, in a case that the coding quantity allocation is executed based on the average coding quantity until the current time in coding, the coding quantity obtained as a result of coding suddenly increases or decreases, if the image contents suddenly change as the scene changes. As a result, an overflow and an underflow may occur in a VBV buffer in which coded data is temporarily stored, or unnatural coding quantity adjustment may be executed so that the overflow and the underflow are prevented, e.g., the adj ustment which makes the quantizing factor suddenly change just before the overflow and the underflow occur.

The present invention has been achieved in order to solve the above problems. It is an obj ect of this invention to execute proper coding quantity allocation through whole image data, based on a feature of the whole image data subjected to the coding.

A coding method of image information according to the present invention includes a feature extraction process which quantizes and codes whole image information subjected to coding to extract feature information, a coding quantity predicting process which quantizes and codes the image information while changing a quantizing factor based on the feature information to determine a proper quantizing factor, and a coding process which utilizes a determined quantizing factor and quantizes and codes the image information to output a result as coded output data.

In this method, first of all, the whole image information subj ected to the coding is quantized and coded to extract feature information in coding the image information. This process is regarded as a preparation which is executed in advance of an actual coding process. Once the feature information of the image information is obtained by quantizing and coding as preparation, a coding quantity predicting process for determining the proper quantizing factor is executed by utilizing the feature information. The feature information is the information which indicates an information quantity according to image information contents subjected to the coding. If the quantizing factor is determined based on the feature information, the proper quantizing factor can be obtained in coding the image information. The coding quantity predicting process can be executed repeatedly until the proper quantizing factor is obtained. When the proper quantizing factor is obtained, the actual coding process is executed. Namely, the image information subj ected to the coding is coded by utilizing the proper quantizing factor obtained in the coding quantity predicting process, and the result thereof is output as coded output data.

According to this method, since the feature of the image information subjected to the coding is extracted in advance and the process in which the proper quantizing factor is determined based on the feature information is executed before the actual coding process, quantizing and coding which are suitable for the image information contents subjected to the coding and for the information quantity are executed. Therefore, failure of a VBV buffer during the coding process and sudden adjustment of the quantizing factor for preventing the failure of the VBV buffer can be avoided. Also, the image information can be coded by the proper coding quantity.

The above coding quantity predicting process may include a factor setting process which sets the quantizing factor of each frame based on the feature information, an experimental coding process which utilizes a set quantizing factor and quantizes and codes of the image information to store result data of coding in a buffer, and a factor changing process which changes the quantizing factor of each frame when an overflow or an underflow occurs in the buffer.

In this case, when the proper quantizing factor is set of each frame, forming the image information, based on the feature information, and quantizing and coding are executed by utilizing the quantizing factor, it is determined whether the failure occurs in the buffer or not, i.e. , whether an overflow and an underflow occur or not. If the failure occurs in the buffer, the quantizing factor of each frame is adjusted, and it is determined whether the failure occurs in the buffer or not by executing quantizing and coding again. By repeating this process, it is possible that the quantizing factor which is suitable for the feature information of the image information and which does not make the buffer fail is obtained of each frame.

The feature information may include a coding quantity of each frame obtained by coding the image information and information which specifies scenes constituting the image information. The experimental coding process may have a process which calculates a weighting value of each frame, and the factor changing process may set the quantizing factor changed based on the calculated weighting value and the quantizing factor which is utilized in a last experimental coding of the frame.

In this case, the coding quantity of each frame and the information which specifies scenes constituting the image information are obtained as the feature information. The scene is a group of shots in the image information. Usually, when the scene changes, the image information contents also change comparatively largely. Thus, a proper weighting value is set in each frame by utilizing the information which specifies the coding quantity and the scene of each frame, and a new quantizing factor is set by adjusting the quantizing factor utilized in the last experimental coding according to the weighting value. In that way, the quantizing factor which is suitable for the feature of the image information and which is allocated in each frame can be adjusted.

The above coding method of the image information can be realized by executing a coding program, which is formed for executing a feature extraction process, the code quantity predicting process and the coding process, on a computer.

A coding apparatus of image information which executes the above coding method include: a quantizing unit which quantizes the image information by a predetermined quantizing factor; a coding unit which codes quantizing data generated by the quantizing unit; a feature extraction unit which quantizes and codes the whole image information and extracts feature information; and a coding quantity predicting unit which quantizes and codes the image information while changing a quantizing factor and determines a proper quantizing factor, based on the feature information, wherein the quantizing unit and the coding unit utilizes the proper quantizing factor to quantize and code the image information and outputs a result as coded output data.

The nature, utility, and further features of this invention will be more clearly apparent from the following detailed description with respect to preferred embodiment of the invention when read in conjunction with the accompanying drawings briefly described below.

**In the Drawings;**

FIG. 1 is a block diagram showing a schematic configuration of a coding apparatus according to an embodiment of the present invention.
FIG. 2 is a flow chart of a coding process according to an embodiment of the present invention.
FIG. 3 is a flow chart of a coding quantity predicting process shown in FIG. 2.
FIGS. 4A and 4B are examples showing variation of data quantity in a VBV buffer during a coding process.

The preferred embodiment of the present invention will now be described below with reference to the attached drawings.

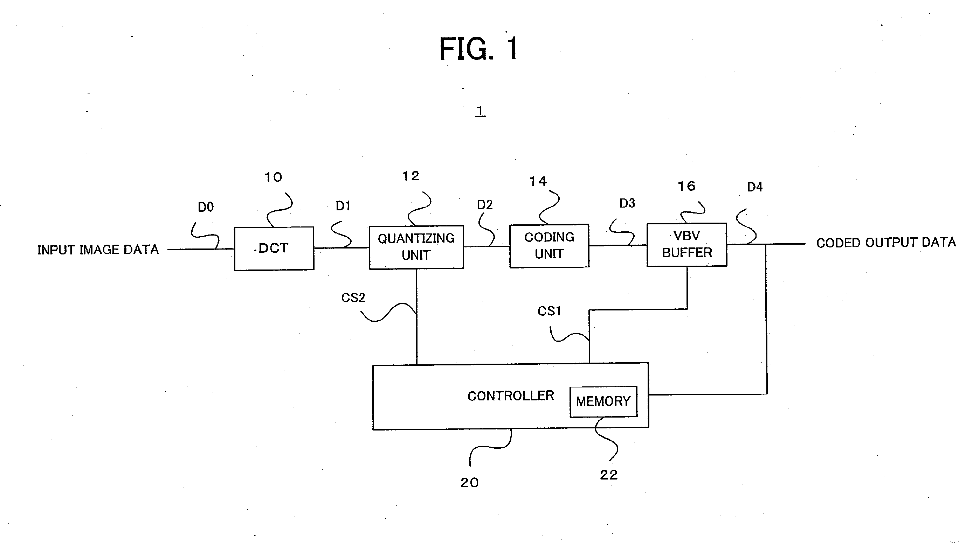

FIG. 1 shows a schematic configuration of a coding apparatus for image data according to an embodiment of the present invention. A coding apparatus 1 performs compressive-coding of input image data D0 with a motion-compensation DCT system and outputs coded output data D4. As shown in FIG. 1, the coding apparatus 1 includes a DCT unit 10, a quantizing unit 12, a coding unit 14, a VBV buffer 16 and a controller 20. The controller 20 has a memory 22 inside.

The DCT unit 10 eliminates redundancy of the image data in a space domain by applying discrete cosine-conversion to the input image data. As to natural image, since level values of picture elements (pixels) are often close to each other in a limited narrow area, the data is shifted to low-frequency side if the image is converted into the data of the space frequency domain. Thus, by allocating smaller bit value to the data in the high-frequency side, the image can be coded by smaller bit value as a whole than before converting. DCT is usually executed per block of 8×8 pixel. As a result, factors of 8x8 are obtained as digital values. Data D1 thus obtained is supplied to the quantizing unit 12.

The quantizing unit 12 quantizes the data D1 by the proper quantizing factor (quantizing bit number). The quantizing factor is appropriately determined according to a frequency component of the data D1. Usually, the quantizing factor of the low-frequency is large because the low-frequency component is significant component for forming the image, and the quantizing factor of the high-frequency is small because the high-frequency is less important than the low-frequency component. The quantizing factor in the quantizing unit 12 is controlled according to a controlling signal CS2 from the controller 20, which will be described in detail later.

The output data D2 from the quantizing unit 12 is supplied to the coding unit 14. The coding unit 14 applies variable length coding to the output data D2. Variable length coding is a coding method of eliminating the redundancy of the data by allocating a short code-length code to the data whose appearance probability is statistically high and allocating a long code-length code to the data whose appearance probability is low.

Output data D3 of the coding unit 14 is temporarily stored in the VBV buffer 16, and is then output as the coded output data D4. It is preferred that the coded output data D4 is at a constant output rate because the data is supplied, as recording data, to a recording medium such as an optical disc. The VBV buffer 16 temporarily stores the output data D3 from the coding unit 14, and outputs the data at a constant rate.

The VBV buffer 16 outputs the control signal CS1 which indicates the data quantity maintained inside to the controller 20. The controller 20 controls the quantizing factor in the quantizing unit 12 by utilizing the control signal CS1 which is supplied from the VBV buffer 16. Basically, since the output data D2 increases if the quantizing factor (bit number) in the quantizing unit 12 is large, the quantity of the output data D3 which is output from the coding unit 14, i.e., the coding quantity, becomes large. Conversely, if the quantizing factor in the quantizing unit 12 is small, the coding quantity becomes small. It is noted that the present invention is characterized in that the quantizing factor in the quantizing unit 12 is determined by utilizing not only the data quantity in the VBV buffer 16 but also the feature information of the input image data, which will be described in detail later.

The coded output data D4 output from the VBV buffer 16 is also input to the controller 20. The controller 20 generates the feature information of the input image data based on the coded output data D4, and stores the information in the memory 22. Further, by utilizing the feature information to control the quantizing factor in the quantizing unit 12, the controller 20 allocates an optimum coding quantity to each frame of the input image data.

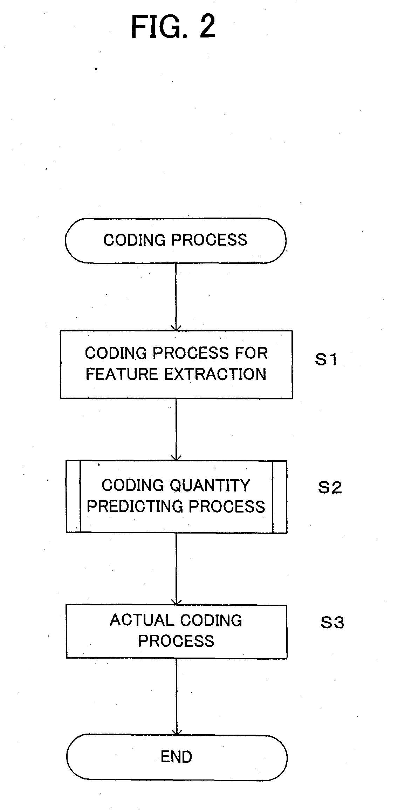

Next, the coding process according to the present invention will be explained. FIG. 2 shows a flow of the coding process according to the present invention. As shown in FIG. 2, in the present invention, the coding process for feature extraction of the input image data is executed before the actual coding process is executed. Concretely, as shown in FIG. 2, first of all, the coding process for the feature extraction is executed (step S1), and the feature information of the input image data is obtained. Next, the coding quantity predicting process is executed (step S2) byutilizingthe feature information obtained in step S1. This process is to predict an optimum coding quantity for coding of the input image data and to set an optimum quantizing factor. When the optimum quantizing factor is obtained, the actual coding process is executed by utilizing the quantizing factor thus obtained (step S3). As a result that the proper coding process is executed, the coded output data is obtained.

Next, each step will be explained in detail. The coding process for the feature extraction is a process to examine the feature of the input image data, and the codingprocess is actually executed by utilizing the coding apparatus 1 shown in FIG. 1. However, the quantizing factor in the quantizing unit 12 is fixed to a constant value during the coding process for the feature extraction. If the quantizing factor is fixed, the information quantity of the input image data is judged by a single standard. Thus, a large changing portion and a small changing portion of the image contents of the input image data can be found. More concretely, if the controller 20 divides the coded output data D4 by each frame-unit, the coding quantity of each frame can be obtained.

By comparing the coding quantity of each frame with each other, a scene changing portion in the input image data can be detected. The scene changing portion is a portion at which the image data contents largely change, and the portion at which the scenes change in a movie and the other image corresponds to the scene changing portion, for example. According to the large change of the image contents at the scene changing portion, the coding quantity of each frame before and after a scene change also largely changes. Therefore, the controller 20 can determine the portion, at which the coding quantity of each frame shows a larger change than the predetermined value, as the scene changing portion.

In that way, the controller 20 generates, as the feature information, the information of (1) the coding quantity of each frame, (2) the information indicating the scene changingportion, and (3) the quantizing factor of each frame, and stores those information in the memory 22. During the coding process for the feature extraction (step S1), since the quantizing factor is fixed as described above, the quantizing factor of each frame is the fixed value for all frames.

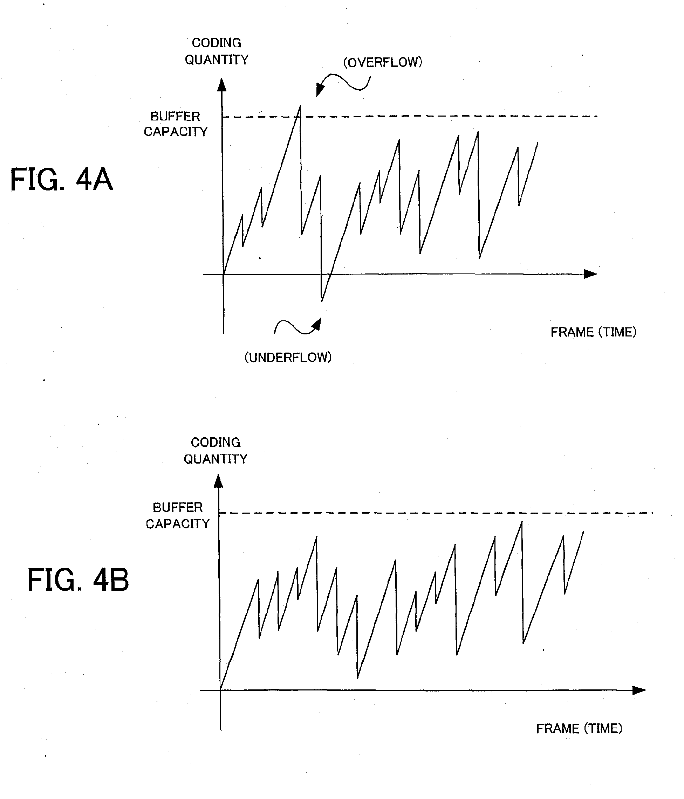

FIG. 4A shows the example of the coding quantity variation during the coding process for the feature extraction. In FIG. 4A, the horizontal axis indicates frame numbers of the input image data, which corresponds to time, and the vertical axis indicates the coding quantity of each frame. VBV buffer capacity is indicated by a broken line. A coding quantity per unit-time is constant, and an increasing rate of the coding quantity, which is an inclination of an increasing segment in the graph, is also constant. Since the coding quantity increases at the portion at which the information quantity in the input image data is large (the change of the image contents is large), a retained data quantity in the VBV buffer 16 becomes smaller than the capacity of the VBV buffer 16. As a result, the underflow may occur. On the other hand, in a period that the information quantity of the input image data is small, the overflow may occur. A situation in which the overflow or the underflow is occurring is called the "failure of the VBV buffer". Since a buffer size of a decoder of the coded output data is set to the capacity of the VBV buffer 16, the coded output data can not be reproduced correctly by the decoder if the VBV buffer 16 fails. Thus, the occurrence of the overflow or the underflow means that the proper coding is not being executed. However, since the coding process for the feature extraction is the so-called experimental coding process in which the quantizing factor is fixed for the feature extraction of the input image data to be executed, occurrences of the overflow and the underflow is acceptable.

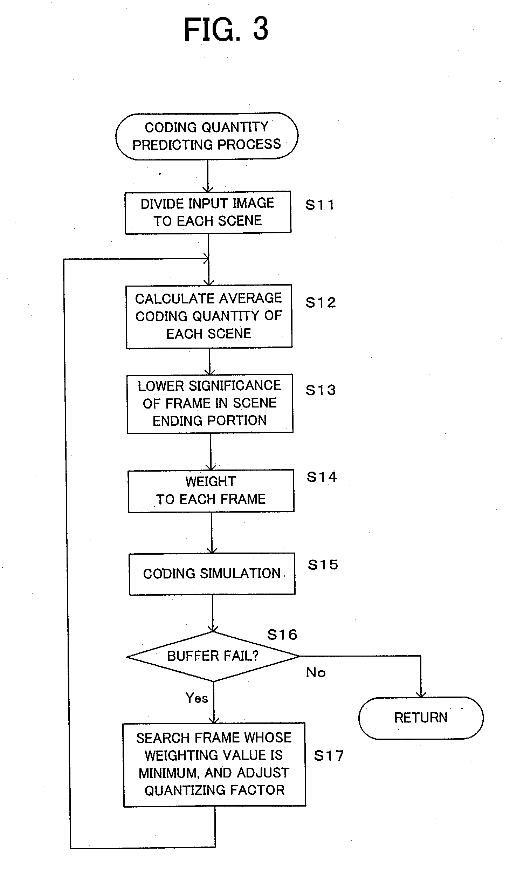

In that way, when the feature information of the input image data D0 is obtained by the coding process for the feature extraction, the coding quantity predicting process (step S2) is executed. FIG. 3 shows the coding quantity predicting process in detail. The coding quantity predicting process is to allocate the optimum coding quantity to each frame of the input image data by utilizing the feature information obtained during the coding process for the feature extraction, i.e., an experimental coding process which executes setting of the optimum quantizing factor of each frame. It is noted that the coding quantity predicting process is also executed by utilizing the feature information stored in the memory 22 and coding the input image data under control of the controller 20 shown in FIG. 1.

Concretely, as shown in FIG. 3, first of all, the controller 20 divides the input image data D0 of each scene (step S11). Since the feature information obtained in step S1 includes the information of the scene changing portion, the input image data D0 can be divided, by utilizing the information, into plural groups of frame images forming scenes. Next, the controller 20 calculates the average coding quantity of each scene (step S12). Since the feature information includes the coding quantity of each frame, the average coding quantity of each frame can be calculated by adding up the coding quantity of plural frames forming each scene and dividing it by the frame number.

Next, significance of the frame corresponding to an ending portion in the scene is set low in each scene (step S13). The significance is determined by whether the frame largely affects the image contents in the input image data or not. Concretely, the significance affects the coding quantity allocated to the frame, i.e., the quantizing factor. Usually, during the scene change, an observer of reproduced image tends to have a strong impression of the image contents after the change. So, even if the quality of the frame image just before the scene change becomes worse slightly, there are fewadverse effects . Therefore, the significance of the frame at the ending portion of the scene is set low.

Next, the controller 20 weights each frame forming the input image data. "Weighting value", which is set to each frame, is a parameter indicating how much coding quantity should be allocated to the frame. Thus, a large weighting value is set to the frame whose information quantity is large and/or whose significance is high, and a small weighting value is set to the frame whose information quantity is small and/or whose significance is low. The weighting value can be set according to the following equation, for example:

$$\text{Weighting value} = 1/[\{(\text{the average coding quantity of}$$

$$\text{the scene}) \times \text{weighting factor 1} + (\text{the coding quantity of an}$$

$$\text{coding object frame - the average coding quantity of the scene})$$

$$\times \text{weighting factor 2} + (\text{the coding quantity of the coding object}$$

$$\text{frame - the coding quantity of the last frame}) \times \text{weighting factor}$$

$$3 + (\text{the coding quantity of the coding object frame / the quantizing}$$

$$\text{factor}) \times \text{weighting factor 4}\} \times \text{weighting factor 5 according to}$$

$$\text{a scene length}].$$

The weighting factors 1 to 5 are the predetermined values ranging between 0 and 1.

After storing the weighting value, which is set of each frame in that way, in the memory 22, the controller 20 updates the quantizing factor of each frame according to the weighting value, and executes a coding simulation (experimental coding) (step S15). The update of the quantizing factor can be executed by multiplying the last value of the quantizing factor of each frame, which is obtained as the feature information and stored in the memory 22, by the weighting value of each frame. It is noted that the coding simulation is a process which executes coding by the coding apparatus 1 by utilizing the quantizing factor actually determined.

During the coding simulation, the controller 20 determines whether the VBV buffer 16 has failed or not based on the control signal CS1 from the VBV buffer 16, i . e . , whether the overflow or the underflow has occurred or not (step S16).

The occurrence of the failure in the VBV buffer 16 means that the quantizing factor of each frame used in this coding simulation is inappropriate. Therefore, the controller 20 searches for the frame whose weighting value is minimum, and adjusts the quantizing factor of the frame (step S17). The reason why the quantizing factor is adjusted in the frame whose weighting value is minimum is to prevent a large effect to the image contents by adjusting the quantizing factor. As for the adjustment of the quantizing factor, the coding quantity is decreased by decreasing the quantizing factor in a case that the failure of the VBV buffer is the overflow, and the coding quantity is increased by increasing the quantizing factor in a case that the failure of the VBV buffer is the underflow.

Afterwards, the process returns to step S12, and each frame is weighted again. And, by setting the quantizing factor, the coding simulation is repeated. In a case that the failure does not occur in the VBV buffer (step S16; No), the process goes ahead to step S3 shown in FIG. 2. FIG. 4B shows the example of variation of the coding quantity of each frame in the case that the failure does not occur in the VBV buffer. As is recognized by the comparison with FIG. 4A, since the overflow and the underflow do not occur, the coded output data at this time can be correctly decoded by the decoder.

In that way, as to the input image data, since the proper quantizing factor is determined of each frame by the coding quantity predicting process, (i.e. , the proper coding quantity allocation has been completed of each frame) , the coding apparatus 1 executes the actual coding process by utilizing the quantizing factor (step S3). If the failure of the VBV buffer is predicted during the actual coding process for some reason in spite of utilizing the quantizing factor determined in that way, the controller 20 can avoid the failure by adjusting the quantizing factor with using the control signal CS 1 from the VBV buffer 16.

As explained above, in the embodiment, first of all, the coding process for the feature extraction of the input image data is executed, and the feature information of the input image data is obtained. By utilizing the information, weighting value is adjusted in the coding quantizing predicting process, and at the same time, the coding simulation is executed so that the optimum quantizing factor is set. Thus, since the optimum quantizing factor is set with the feature of the whole input image data grasped, the failure of the VBV buffer can be surely prevented, and coding suitable for the feature of the input image data is possible.

**Claims**

1. A coding method of image information comprising:

    a feature extraction process which quantizes and codes whole image information subjected to coding to extract feature information;
    a coding quantity predicting process which quantizes and codes the image information, while changing a quantizing factor based on the feature information, to determine a proper quantizing factor; and
    a coding process which utilizes a determined quantizing factor and quantizes and codes the image information to output a result as coded output data.

2. The coding method according to claim 1, wherein the coding quantity predicting process comprises:

    a factor setting process which sets the quantizing factor of each frame based on the feature information;
    an experimental coding process which utilizes a set quantizing factor and quantizes and codes of the image information to store result data of coding in a buffer (16); and
    a factor changing process which changes the quantizing factor of each frame when an overflow or an underflow occurs in the buffer.

3. The coding method according to claim 2:
    wherein the feature information comprises a coding quantity of each frame obtained by coding the image information, and information which specifies scenes constituting the image information;
    wherein the experimental coding process has a process which calculates a weighting value of each frame; and
    wherein the factor changing process changes the quantizing factor, based on the calculated weighting value and the quantizing factor which is utilized in a previous experimental coding of the frame.

4. A coding program of image information which makes a computer execute, by executing on the computer:

   a feature extraction process which quantizes and codes whole image information subj ected to coding and extracts feature information;
   a coding quantity predicting process which quantizes and codes the image information, while changing a quantizing factor and determines a proper quantizing factor, based on the feature information; and
   a coding process which utilizes the proper quantizing factor and quantizes and codes the image information to output a result as coded output data.

5. A coding apparatus (1) of image information comprising:

   a quantizing unit (12) which quantizes the image information by a predetermined quantizing factor;
   a coding unit (14) which codes quantizing data generated by the quantizing unit;
   a feature extraction unit (20) which quantizes and codes the whole image information and extracts feature information; and
   a coding quantity predicting unit (20) which quantizes and codes the image information, while changing a quantizing factor and determines a proper quantizing factor, based on the feature information,

   wherein the quantizing unit (12) and the coding unit (14) utilizes the proper quantizing factor to quantize and code the image information and outputs a result as coded output data.

# FIG. 1

<u>1</u>

INPUT IMAGE DATA → D0 → **DCT** (10) → D1 → **QUANTIZING UNIT** (12) → D2 → **CODING UNIT** (14) → D3 → **VBV BUFFER** (16) → D4 → CODED OUTPUT DATA

CS2 — CS1 — **CONTROLLER** (20) — **MEMORY** (22)

EP 1 420 365 A2

# FIG. 2

```
      ┌─────────────────────────┐
      │     CODING PROCESS      │
      └─────────────────────────┘
                   │
                   ▼
      ┌─────────────────────────┐
      │   CODING PROCESS FOR    │    S1
      │   FEATURE EXTRACTION    │
      └─────────────────────────┘
                   │
                   ▼
      ┌─────────────────────────┐
      │    CODING QUANTITY      │    S2
      │   PREDICTING PROCESS    │
      └─────────────────────────┘
                   │
                   ▼
      ┌─────────────────────────┐
      │     ACTUAL CODING       │    S3
      │        PROCESS          │
      └─────────────────────────┘
                   │
                   ▼
      ┌─────────────────────────┐
      │          END            │
      └─────────────────────────┘
```

# FIG. 3

CODING QUANTITY
PREDICTING PROCESS

DIVIDE INPUT IMAGE
TO EACH SCENE — S11

CALCULATE AVERAGE
CODING QUANTITY OF
EACH SCENE — S12

LOWER SIGNIFICANCE
OF FRAME IN SCENE
ENDING PORTION — S13

WEIGHT
TO EACH FRAME — S14

CODING SIMULATION — S15

S16

BUFFER FAIL?

No

Yes

RETURN

SEARCH FRAME WHOSE
WEIGHTING VALUE IS
MINIMUM, AND ADJUST
QUANTIZING FACTOR — S17

FIG. 4A

CODING
QUANTITY

(OVERFLOW)

BUFFER
CAPACITY

FRAME (TIME)

(UNDERFLOW)

FIG. 4B

CODING
QUANTITY

BUFFER
CAPACITY

FRAME (TIME)